# EUROPEAN PATENT SPECIFICATION

(11) **EP 2 363 339 B1**
(45) Date of publication and mention of the grant of the patent: **08.05.2013**
(21) Application number: 10191414.1
(22) Date of filing: 16.11.2010
(51) Int. Cl.: B62K 25/02, B62M 9/124, B62M 9/125

(54) **Bicycle frame provided with a derailleur and a rear wheel**
Fahrradrahmen mit Kettenschaltung und Hinterrad
Cadre de bicyclette pourvu d'un dérailleur et d'une roue arrière

(30) Priority: 04.03.2010 NL 2004338
(43) Date of publication of application: 07.09.2011
(73) Proprietor: Koga B.V., 8445 PD Heerenveen (NL)
(72) Inventor: Dorlandt, Mark Robin, 8448 NW Heerenveen (NL)
(74) Representative: Jansen, Cornelis Marinus

(56) References cited:
- EP-A1- 0 875 444
- EP-A2- 1 213 217
- EP-A2- 1 375 321
- US-A- 4 905 541
- US-B1- 6 293 883

## Description

The invention relates to a bicycle frame which is provided with a derailleur and a rear wheel, the rear wheel comprising a hub, the hub comprising a hub drum, a wheel axle bearing-mounted therein and a quick fixing mechanism, wherein the quick fixing mechanism comprises a handle which is pivotable back and forth about a handle pivot between a fixing position and a release position for fixing and releasing, respectively, the wheel axle with respect to a rear fork of a bicycle when the hub is placed in the rear fork, wherein the handle is situated at an axial end of the hub on a longitudinal half of the hub drum, which longitudinal half is provided with a sprocket assembly of multiple individual sprockets for driving the rear wheel, and wherein the derailleur is configured for cooperation with the sprocket assembly.

With such a combination of sprocket assembly and derailleur, riders of a bicycle can alternate as desired between different transmission ratios of the chain drive. The derailleur is normally suspended from the bicycle frame through an extended portion of a rear tab.

A well known problem in bicycles with a derailleur is that the derailleur and the suspension of the derailleur on the bicycle frame are relatively vulnerable. When, for example, the bicycle tips over, this often results in damage and/or bending of the derailleur and/or its suspension. To protect the derailleur and the respective rear tab, in practice sometimes a robust protective bracket is used. This protective bracket is bolted to the bicycle frame on the derailleur side of the bicycle frame. Such a protective bracket is known, for example, from US4905541A. If, for example, the bicycle tips over, the protective bracket, not the derailleur, strikes against the ground. It is a drawback, however, that the use of such a protective bracket requires additional assembly activities and increases the weight of the bicycle. Also, such a protective bracket is experienced by some as marring.

It is an object of the invention to provide at least an alternative solution to ameliorate the vulnerability of the derailleur and its suspension. More particularly, it is an object of the invention for that solution to obviate additional assembly activities and weight increase of the bicycle.

To that end, according to the invention, a bicycle frame of the type initially indicated is characterized in that, at least in the fixing position and seen in rear view of the hub, at least a part of the handle is situated to the side of the derailleur which is remote from spokes of the rear wheel, for protecting the derailleur from sideward impacts. More specific embodiments of the invention are laid down in the dependent claims.

According to the invention, the handle of the quick fixing mechanism is therefore on the derailleur side of the bicycle.

It is noted that a rear wheel hub with a quick fixing mechanism, also referred to as a Quick Release mechanism, is well known and is frequently used in bicycles that are provided with a derailleur. With the aid of the handle of the quick fixing mechanism, the rear wheel can easily and rapidly be manually placed in a rear fork of a bicycle and removed therefrom. The fact is, the handle is connected with a clamping shaft which extends coaxially through the wheel axle, which is then hollow. In the fixing position of the handle, the clamping shaft pulls the two drop-out ends on opposite sides of the rear fork towards each other with a clamping force, whereby the wheel axle is clamped tight in the rear fork. In the release position, this clamping force is removed. In contrast with the invention, however, the handle of the quick fixing mechanism of the known hub mounted in a bicycle is usually situated on the non-derailleur side of the bicycle. The reason for this is that on the non-derailleur side of the bicycle, much space is present for accommodating the handle, for permitting a large pivoting range of the handle and for easy and safe accessibility for operating the handle by hand, as opposed to the derailleur side of the bicycle, where much space is taken up by sprocket assembly, chain, derailleur, associated suspension provisions, cover provisions, protective provisions, operating elements, cabling, or other fittings. The disclosure formed by the known hub with quick fixing mechanism hence certainly does not provide any hint for the skilled person to situate the handle of the quick fixing mechanism on the derailleur side.

As, according to the invention, the handle of the quick fixing mechanism is on the derailleur side of the bicycle, the handle can be so shaped and/or oriented in its fixing position that portions of the derailleur and its suspension are between spokes of the rear wheel and parts of the handle. Thus, the handle of the quick fixing mechanism functions as a construction for protecting the derailleur and its suspension from sideward impacts.

It is noted that it is known from EP0875444A1 to situate a handle of a quick fixing mechanism on the derailleur side of a bicycle frame. In Fig. 1 of EP0875444A1, however, it can be seen that the shaping and/or orientation of the handle 96 shown there is not such that the handle 96 protects the derailleur 10 shown there from sideward impacts.

In comparison with bicycles that are provided in the above-mentioned known manner with a rear wheel hub with quick fixing mechanism, i.e., where the handle of the quick fixing mechanism is situated on the non-derailleur side while on the derailleur side a protective bracket is bolted to the bicycle frame, the invention provides the further advantages that the protective function presented by the handle does not require any additional assembly activities and does not result, or does so only to a minor extent, in an increase of the bicycle weight. This is because the handle, according to the invention, fulfills both the function of operating element for the quick fixing mechanism and the function of protective element for the derailleur and its suspension. In the invention this is hence realized by means of just a single element, whereas the above-mentioned known art necessitates two separate elements on opposite longitudinal sides of the bicycle for the two functions mentioned.

In a first preferred embodiment of the invention, at least in the fixing position, the extreme end of the handle remote from the wheel axle is situated on a side remote from the hub drum of a straight first reference plane which is perpendicular to the centerline of the wheel axle and extends through the centerline of the handle pivot. This promotes an ample interspace between spokes of the rear wheel and parts of the handle, so that this interspace can accommodate derailleurs and derailleur suspensions of various forms and dimensions. Preferably, in the fixing position, the distance, measured perpendicularly to the first reference plane, between said extreme end of the handle and the first reference plane is greater than 5 millimeters, more preferably, greater than 15 millimeters, still more preferably, greater than 25 millimeters.

It is noted that the extreme end remote from the wheel axle of a handle of the quick fixing mechanism of the above-mentioned known hub is situated, in the fixing position, on a side of the first reference plane that is proximal to the hub drum. The extreme end of the known handle even exhibits, with respect to the rest of the handle, a bending in the direction of the hub drum. The reason for this is that this extreme end of the known handle, in the fixing position, needs to be concealed, as it were, within the respective bicycle rear frame half, so that in this manner the known handle is prevented from unintentionally dislodging from its fixing position as a result of external objects getting accidentally caught on that extreme end. The fact is, the known handle, in its fixing position, is placed as much as possible along the outer side of and parallel against a fork leg of a rear fork, while the extreme end of the known handle bends inwardly around that fork leg. The disclosure formed by the known hub with quick fixing mechanism hence certainly does not provide any hint for the skilled person to use the special measures of the first preferred embodiment of the invention.

In a second preferred embodiment of the invention, which second preferred embodiment may possibly be used in combination with the above-described first preferred embodiment, an end portion of the handle that extends up to and includes the extreme end of the handle remote from the wheel axle extends at least on both opposite sides of a straight second reference plane, which second reference plane is perpendicular to the centerline of the handle pivot and extends through the centerline of the wheel axle. This promotes a balanced spatial distribution of the protective action of the handle in the fixing position because the derailleurs and the associated suspensions thereof, seen in side view of a bicycle, are located in a spatial area located substantially vertically below the wheel axle. It is noted that such an end portion of the handle of the quick fixing mechanism of the above-mentioned known hub extends only on one side of the second reference plane. The reason for this is that such an end portion of the known handle needs to be compactly designed, so that in this manner the known handle is prevented from unintentionally dislodging from its fixing position as a result of external objects getting accidentally caught on that end portion of the known handle. The disclosure that is formed by the known hub with quick fixing mechanism hence certainly does not provide any hint for the skilled person to use the special measures of the second preferred embodiment of the invention.

It is noted that the invention can also be embodied in a hub for a rear wheel for a bicycle, comprising a hub drum, a wheel axle bearing-mounted therein and a quick fixing mechanism, wherein the quick fixing mechanism comprises a handle which is pivotable back and forth about a handle pivot between a fixing position and a release position for fixing and releasing, respectively, the wheel axle with respect to a rear fork of a bicycle when the hub is placed in the rear fork, wherein the handle is situated at an axial end of the hub on a longitudinal half of the hub drum, which longitudinal half is provided with a sprocket assembly of multiple individual sprockets for driving the rear wheel;
which hub is characterized in that:
- at least in the fixing position, the extreme end of the handle remote from the wheel axle is situated on a side remote from the hub drum of a straight first reference plane which is perpendicular to the centerline of the wheel axle and extends through the centerline of the handle pivot, in such a manner that a derailleur provided on a bicycle frame and cooperating with the sprocket assembly is protected by the handle from sideward impacts;
and/or which hub is characterized in that:
- an end portion of the handle that extends up to and includes the extreme end of the handle remote from the wheel axle extends at least on both opposite sides of a straight second reference plane, which second reference plane is perpendicular to the centerline of the handle pivot and extends through the centerline of the wheel axle, in such a manner that a derailleur provided on a bicycle frame and cooperating with the sprocket assembly is protected by the handle from sideward impacts.

In the following, the invention will be further elucidated with reference to the schematic figures in the appended drawings.
Fig. 1A shows a known rear wheel hub provided with a known quick fixing mechanism, with the handle of the quick fixing mechanism in its fixing position, and the left-hand portion of the figure showing a side view of the handle and the right-hand portion of the figure showing a rear view of the hub, the views being in part transparent.
Fig. 1B shows similar views of the known rear wheel hub of Fig. 1A, however, with the handle of the quick fixing mechanism in its release position.
Fig. 2A shows an example of an embodiment of a rear wheel hub for use in the invention, with the handle of the quick fixing mechanism of that hub in its fixing position, and the left-hand portion of the figure showing a rear view of that hub and the right-hand portion of the figure showing a side view of that handle, the views being in part transparent.
Fig. 2B shows similar views of the rear wheel hub of Fig. 2A, however, with the handle of the quick fixing mechanism of that hub in its release position.
Fig. 3 shows, in perspective and in disassembled condition, the quick fixing mechanism of the rear wheel hub shown in Figs. 2A and 2B.
Fig. 4 shows the quick fixing mechanism of Fig. 3 again in perspective, but now in assembled condition.
Fig. 5 shows, in perspective, parts of the rear wheel hub shown in Figs. 2A and 2B once again, with the hub placed in a bicycle frame from which a derailleur is suspended, and with the handle of the quick fixing mechanism of that hub in its fixing position.
Fig. 6 shows the view of Fig. 5 once again, now additionally showing the sprocket assembly of the hub.

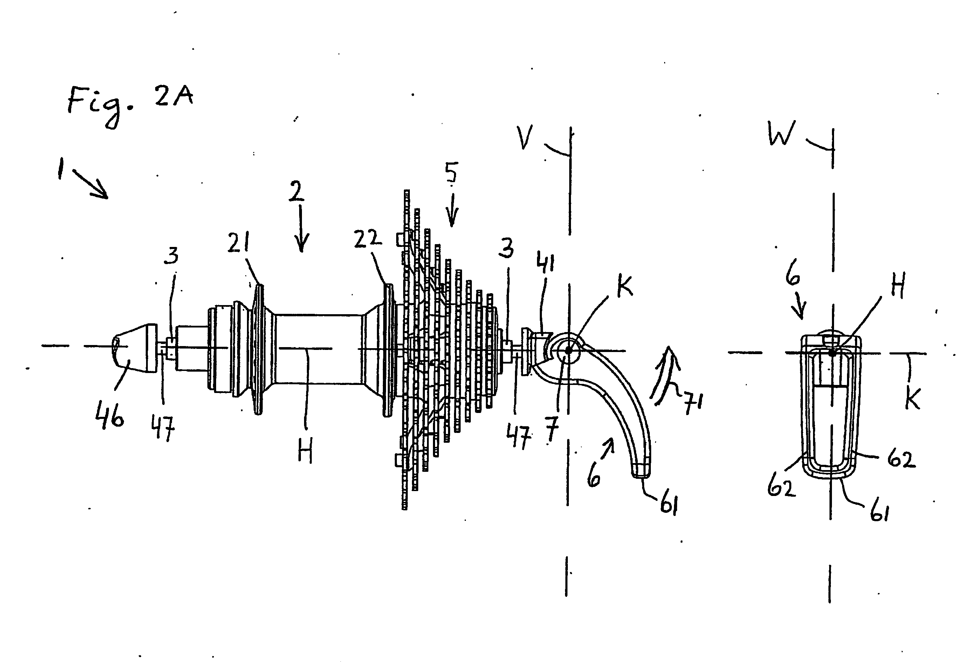

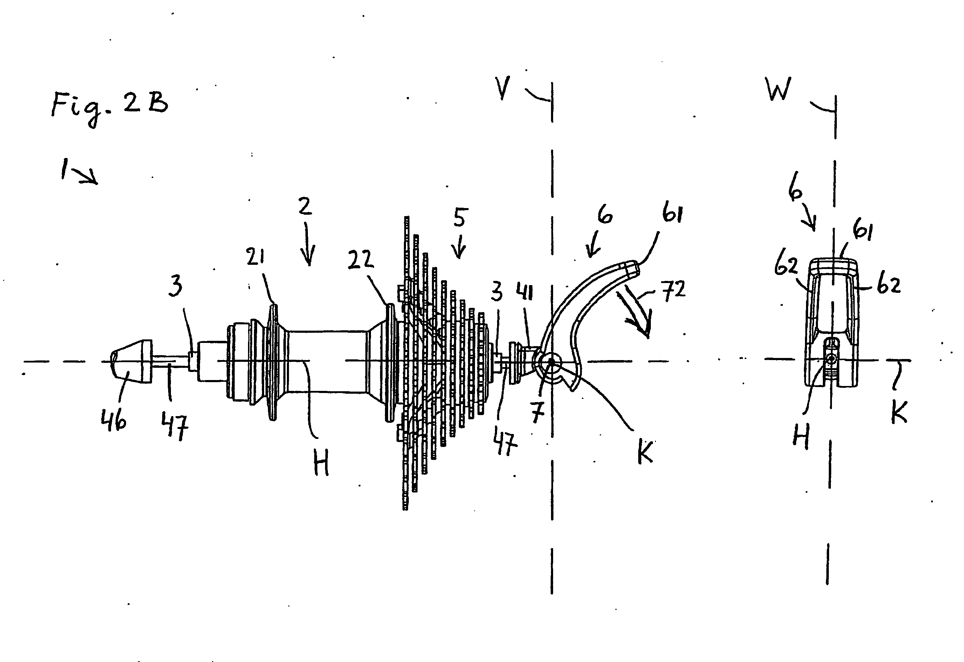

Reference is now first made to Figs. 2 to 6, which show an example of an embodiment of a rear wheel hub 1 for use in the invention.

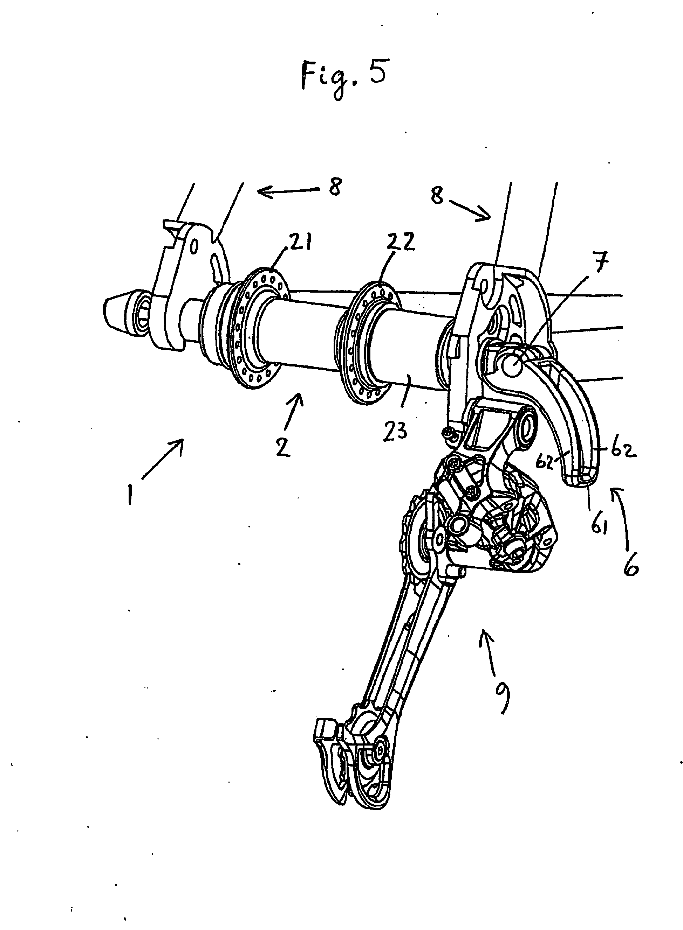

The hub 1 shown comprises a hub drum 2, a wheel axle 3 bearing-mounted therein, and a quick fixing mechanism 4. The hub drum 2 has two flanges 21, 22, each including in circumferential direction a number of passage openings (shown in Fig. 5) for a number of spokes which can extend by their one ends through the passage openings in the flanges and can be attached by their other ends to a rim of a rear wheel of which the hub 1 can be part.

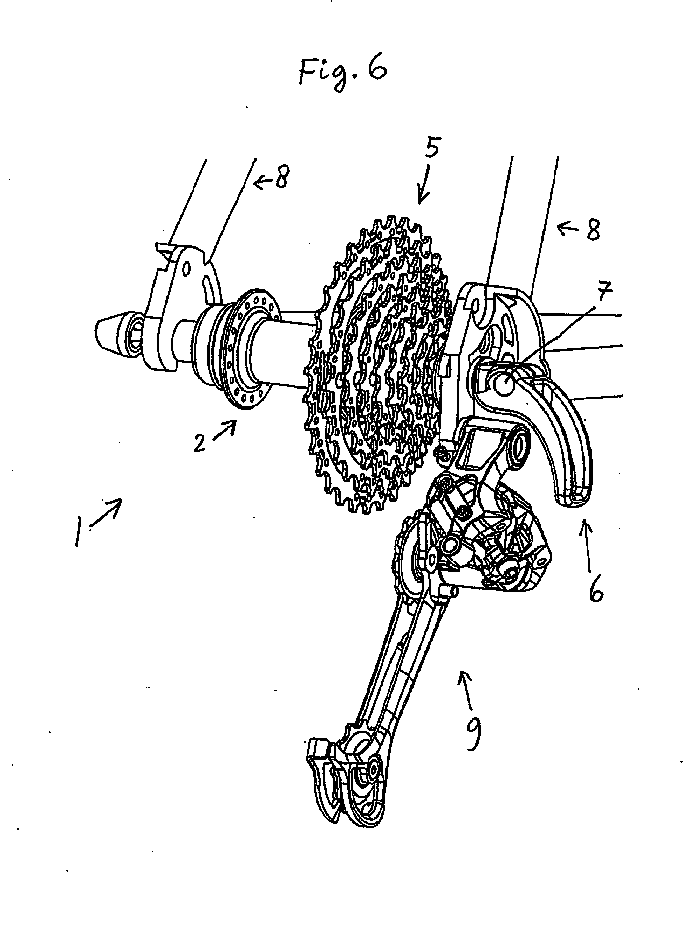

In Fig. 5 it is shown that the hub drum 2 is provided with a mounting element 23 on which a sprocket assembly of multiple individual sprockets for driving the rear wheel can be mounted. Figs. 6, 2A and 2B show such a sprocket assembly 5 that is attached to the mounting element 23. Accordingly, the hub drum of a hub for use in the invention can comprise means of attachment, such as, for example, the mounting element 23 shown, or, for example, external thread, for attaching such sprocket assembly. Such sprocket assembly, however, may also be manufactured integrally with the hub drum. The sprocket assembly 5 can itself include a freewheel mechanism, in which case the sprocket assembly inclusive of the freewheel mechanism can be mounted on the hub drum. Instead, a freewheel mechanism may also be included in other parts of the rear wheel hub 1.

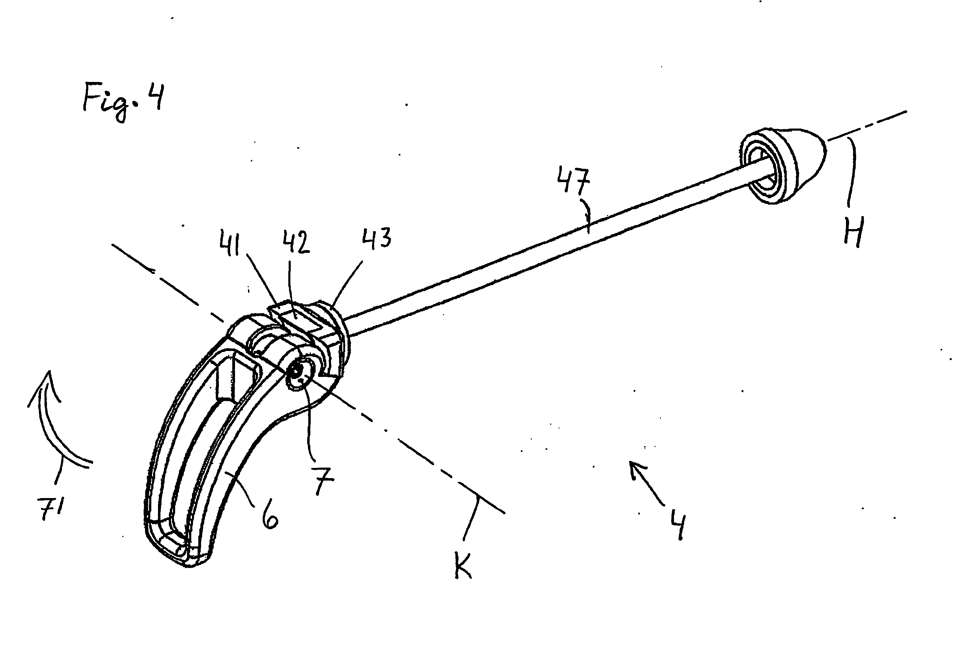

The quick fixing mechanism 4 comprises a handle 6 situated at an axial end of the hub 1, which is pivotable back and forth about a handle pivot 7 between a fixing position and a release position. The fixing position of the handle 6 is shown in Figs. 2A, 4, 5 and 6, and the release position of the handle 6 is shown in Fig. 2B. In Figs. 2A and 4, the pivoting direction of the handle 6 about the handle pivot 7 is designated by means of an arrow 71, in the case where the handle 6 pivots from the fixing position shown there to the release position. Conversely, arrow 72 in Fig. 2B shows the pivoting direction of the handle 6 from the release position to the fixing position.

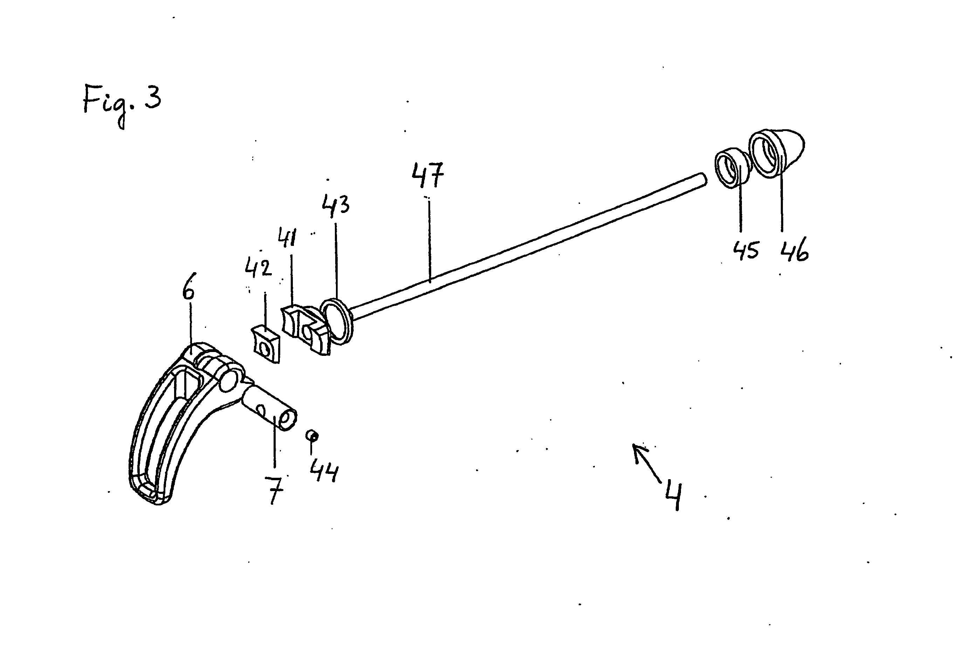

In Figs. 3 and 4 the quick fixing mechanism 4 is shown in more detail. The quick fixing mechanism 4 comprises the handle 6, the handle pivot 7, a clamping shaft 47, a housing 41, a slide bearing 42, a ring 43, a bolt 44, a nut 45, and a nut cap 46. In the assembled condition, one end of the clamping shaft 47 extends through the ring 43, through the housing 41 and through the slide bearing 42, and is fixed with respect to the handle pivot 7. The nut 45 and nut cap 46 are arranged at the other end of the clamping shaft 47. By means of eccentric shaping of external surfaces of the handle 6 with respect to the centerline K of the handle pivot 7, the housing 41 is slid further onto the clamping shaft 47 when the handle 6 is pivoted from its release position to the fixing position.

In the fixing position of the handle 6 the rear wheel hub 1 can be secured on the drop-out ends of the rear fork 8 (see Figs. 5 and 6) of a bicycle frame with a clamping force. In the release position this clamping force is removed. The action of this clamping force can be seen in Figs. 2A and 2B in that in the fixing position of Fig. 2A the axial length of the part of the clamping shaft 47 that is exposed between the nut cap 46 and the wheel axle 3 is smaller than the corresponding axial length of the corresponding exposed part of the clamping shaft 47 in the release position of Fig. 2B.

In Figs. 2A, 2B, 5 and 6 it can be seen that the handle 6 is situated at the axial end of the hub 1 that is closest to the sprocket assembly 5. This axial end therefore lies on the hub drum longitudinal half that is provided with the sprocket assembly 5. This provides the advantage that the handle 6 in its fixing position may be so oriented that portions of the derailleur 9 (see Figs. 5 and 6) and of the derailleur suspension are between spokes of the rear wheel and parts of the handle. As already preliminarily described hereinabove, the handle 6 of the quick fixing mechanism 4 thus serves as a construction for protecting the derailleur 9 and its suspension from sideward impacts.

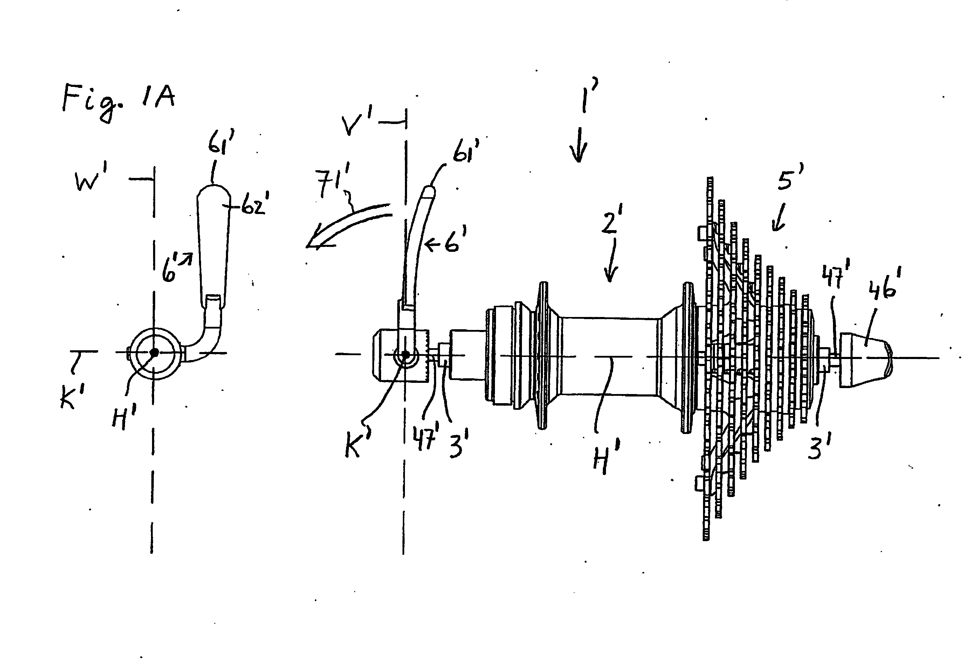

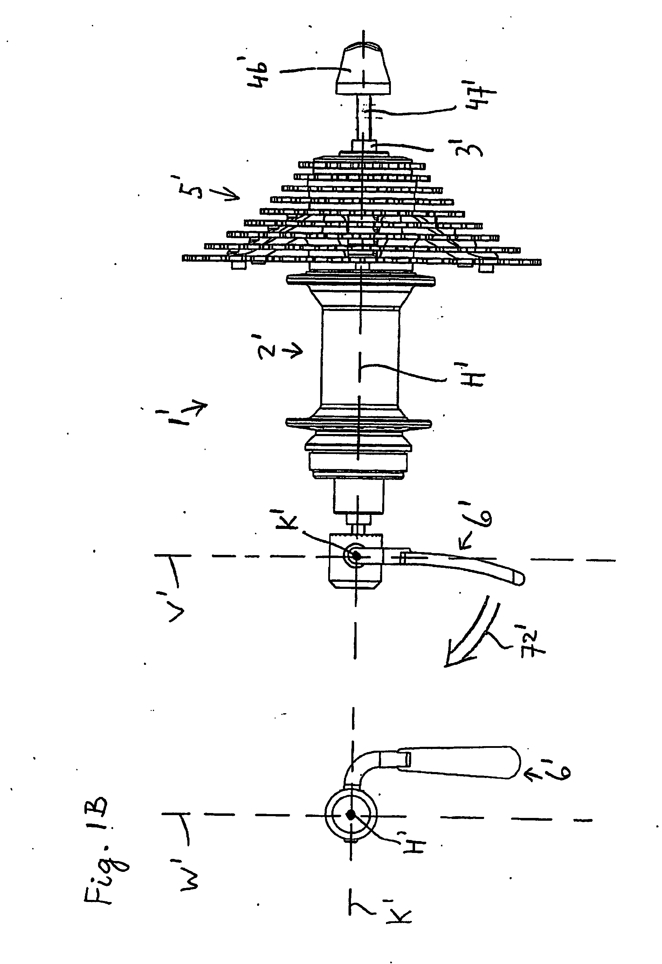

The last-mentioned features of the rear wheel hub 1 for use in the invention do not occur in the known rear wheel hub 1' with quick fixing mechanism as shown in Figs. 1A and 1B. It is noted that in Figs. 1A and 1B, components and aspects of the known hub 1' that are comparable to components and aspects of the rear wheel hub 1, shown in Figs. 2A and 2B, for use in the invention are indicated with the same reference characters, though with a prime (') suffixed to the respective reference character. In the right-hand portions of Figs. 1A and 1B it can be seen that the handle 6' is situated at the axial end of the hub 1' on the longitudinal half of the hub drum 2' that is not provided with the sprocket assembly 5'. As already preliminarily described hereinabove, the reason for this is that the handle 6' in installed condition of the rear wheel is then on the non-derailleur side of the bicycle, where there is much space present for accommodating the handle, for permitting a large pivoting range of the handle and for easy and safe accessibility for operating the handle by hand.

In comparison with the known rear wheel hub 1', the rear wheel hub 1 for use in the invention hence provides the further advantages that the protective function provided by the handle 6 does not require any additional assembly activities and does not result, or results only to a minor extent, in any increase of the bicycle weight.

Reference is now made again to Figs. 2 to 6, in which the rear wheel hub 1 for use in the invention is shown. In Figs. 2A, 2B and 4, reference letter H designates the centerline of the wheel axle 3 and reference letter K the centerline of the handle pivot 7. Further, in Figs. 2A and 2B, reference letter V designates a straight first reference plane, which first reference plane V is perpendicular to the centerline H of the wheel axle 3 and extends through the centerline K of the handle pivot 7. Furthermore, in Figs. 2A, 2B and 5, reference numeral 61 designates the extreme end of the handle 6 remote from the wheel axle 3. In the left-hand portion of Fig. 2A, it can be seen that, at least in the fixing position of Fig. 2A, the extreme end 61 of the handle 6 is situated on a side of the first reference plane V remote from the hub drum 2. As already described preliminarily hereinabove, this promotes an ample interspace between spokes of the rear wheel and parts of the handle 6, so that this interspace can accommodate derailleurs and derailleur suspensions of various forms and dimensions.

In the right-hand portion of Fig. 1A, it can be seen that in the known rear wheel hub 1' with quick fixing mechanism the extreme end 61' of the handle 6', at least in the fixing position of Fig. 1A, is not situated on the side of the first reference plane V' remote from the hub drum 2'. Instead, the extreme end 61' of the handle 6' is situated, in the fixing position of Fig. 1A, on the side of the first reference plane V' proximal to the hub drum 2'. As already preliminarily described hereinabove, the reason for this is that the extreme end 61' of the known handle 6' in the fixing position thereof can be concealed, as it were, within the respective bicycle rear frame half, so that in this manner the known handle 6' is prevented from unintentionally dislodging from its fixing position as a result of external objects getting accidentally caught on this extreme end 61'.

Reference is now made again to Figs. 2 to 6, in which the rear wheel hub 1 for use in the invention is shown. In Figs. 2A and 2B, reference letter W designates a straight second reference plane, which second reference plane W is perpendicular to the centerline K of the handle pivot 7 and extends through the centerline H of the wheel axle 3. Further, in Figs. 2A, 2B and 5, reference numeral 62 designates an end portion of the handle 6, which end portion 62 extends up to and includes the extreme end 61 of the handle 6. In the right-hand portions of Figs. 2A and 2B it can be seen that the end portion 62 extends at least on both opposite sides of the second reference plane W. As already preliminarily described hereinabove, this promotes a balanced spatial distribution of the screening action of the handle in the fixing position, because derailleurs and the associated suspensions thereof, seen in side view of a bicycle, are located in a spatial area located substantially vertically below the wheel axle.

In the left-hand portions of Figs. 1A and 1B it can be seen that in the known rear wheel hub 1' with quick fixing mechanism the end portion 62' does not extend on both opposite sides of the second reference plane W'. Instead, the end portion 62' extends just on one side of the second reference plane W'. As already preliminarily described hereinabove, the reason for this is that the end portion 62' of the known handle 6' needs to be of compact design, so that in this manner the known handle 6' is prevented from unintentionally dislodging from its fixing position as a result of external objects getting accidentally caught on that end portion 62'.

In Figs. 2A and 6 it can be seen that the handle 6, there being in its fixing position, comprises a portion that, viewed in a direction parallel to the centerline H of the wheel axle 3, is situated on a side of the derailleur 9 remote from spokes of the rear wheel, for protecting the derailleur from sideward impacts. When, for example, the bicycle tips over, it is the handle 6, not the derailleur, that strikes against the ground.

It is noted that the above-mentioned examples of embodiments do not limit the invention and that various alternatives are possible within the scope of the appended claims.

For example, there are many variations possible in the forms and dimensions of the handle of the quick fixing mechanism. The handle 6 shown has, for example, an open portion in its hand engaging portion, which has a weight saving function. Instead, however, a closed hand engaging portion may be used or the hand engaging portion may be provided with multiple open portions.

Also, it is possible that the other longitudinal half of the hub drum, i.e., the longitudinal half farthest removed from the handle, is also provided with a sprocket assembly of multiple individual sprockets and/or at least with means of attachment for such sprocket assembly and/or with a single such sprocket and/or at least with means of attachment for such single sprocket.

Furthermore, it is possible that the wheel axle itself functions as clamping shaft. In such a case, the handle of the quick fixing mechanism does not need to be connected with a clamping shaft extending through a hollow wheel axle, but can be connected directly with the wheel axle itself.

Other variants or modifications, however, are also possible. These and similar alternatives are understood to fall within the framework of the invention as defined in the appended claims.

## Claims

1. A bicycle frame provided with a derailleur (9) and a rear wheel, the rear wheel comprising a hub (1), the hub comprising a hub drum (2), a wheel axle (3) bearing-mounted therein and a quick fixing mechanism (4), wherein the quick fixing mechanism comprises a handle (6) which is pivotable back and forth about a handle pivot (7) between a fixing position and a release position for fixing and releasing, respectively, the wheel axle with respect to a rear fork (8) of a bicycle when the hub is placed in the rear fork, wherein the handle (6) is situated at an axial end of the hub (1) on a longitudinal half of the hub drum (2), which longitudinal half is provided with a sprocket assembly (5) of multiple individual sprockets for driving the rear wheel, and wherein the derailleur (9) is configured for cooperation with the sprocket assembly (5), **characterized in that**, at least in the fixing position and seen in rear view of the hub, at least a part of the handle (6) is situated to the side of the derailleur (9) which is remote from spokes of the rear wheel, for protecting the derailleur from sideward impacts.

2. A bicycle frame according to claim 1, wherein, at least in the fixing position, the extreme end (61) of the handle (6) remote from the wheel axle (3) is situated on a side remote from the hub drum (2) of a straight first reference plane (V) which is perpendicular to the centerline (H) of the wheel axle (3) and extends through the centerline (K) of the handle pivot (7).

3. A bicycle frame according to claim 2, wherein, in the fixing position, the distance, measured perpendicularly to the first reference plane (V), between said extreme end (61) of the handle (6) and the first reference plane is greater than 5 millimeters.

4. A bicycle frame according to any one of the preceding claims, wherein an end portion (62) of the handle (6) that extends up to and includes the extreme end (61) of the handle remote from the wheel axle (3) extends at least on both opposite sides of a straight second reference plane (W), which second reference plane is perpendicular to the centerline (K) of the handle pivot (7) and extends through the centerline (H) of the wheel axle (3).

## Patentansprüche

1. Fahrradrahmen mit Kettenschaltung (9) und einem Hinterrad, das eine Nabe (1) umfasst, die wiederum eine Nabentrommel (2), eine darin gelagert montierte Radachse (3) und einen Schnellbefestigungsmechanismus (4) umfasst, wobei der Schnellbefestigungsmechanismus einen Griff (6) umfasst, der vor und zurück drehbar um einen Griffdrehzapfen (7) ist zwischen einer Befestigungsposition und einer Löseposition zum Befestigen bzw. Lösen der Radachse in Bezug auf eine hintere Gabel (8) eines Fahrrads, wenn die Nabe in der hinteren Gabel angebracht ist, wobei sich der Griff (6) an einem axialen Ende der Nabe (1) auf einer Längshälfte der Nabentrommel (2) befindet, auf welcher Längshälfte eine Kettenradgruppe (5) aus mehreren einzelnen Kettenrädern zum Antreiben des Hinterrads angebracht ist, und wobei die Kettenschaltung (9) für die Zusammenarbeit mit der Kettenradgruppe (5) konfiguriert ist, **dadurch gekennzeichnet, dass** mindestens in der Befestigungsposition und gesehen in Hinteransicht der Nabe mindestens ein Teil des Griffs (6) an der von den Speichen des Hinterrads entfernten Seite der Kettenschaltung (9) angeordnet ist, um die Kettenschaltung gegen seitliche Stöße zu schützen.

2. Fahrradrahmen nach Anspruch 1, wobei mindestens in der Befestigungsposition das von der Radachse (3) entfernte äußerste Ende (61) des Griffs (6) auf einer von der Nabentrommel (2) entfernten Seite einer geraden ersten Referenzebene (V) angeordnet ist, die lotrecht zur Mittellinie (H) der Radachse (3) ist und durch die Mittellinie (K) des Griffdrehzapfens (7) verläuft.

3. Fahrradrahmen nach Anspruch 2, wobei in der Befestigungsposition der lotrecht zur ersten Referenzebene (V) gemessene Abstand zwischen dem äußersten Ende (61) des Griffs (6) und der ersten Referenzebene mehr als 5 Millimeter beträgt.

4. Fahrradrahmen nach einem der vorhergehenden Ansprüche, wobei ein Endabschnitt (62) des Griffs (6), der bis zu dem von der Radachse (3) entfernten äußersten Ende (61) des Griffs verläuft und dieses einbezieht, mindestens auf beiden entgegengesetzten Seiten einer geraden zweiten Referenzebene (W) verläuft, welche zweite Referenzebene lotrecht zur Mittellinie (K) des Griffdrehzapfens (7) ist und durch die Mittellinie (H) der Radachse (3) verläuft.

## Revendications

1. Cadre de bicyclette pourvu d'un dérailleur (9) et d'une roue arrière, la roue arrière comprenant un moyeu (1), le moyeu comprenant un tambour de moyeu (2), un essieu de roue (3) monté sur roulement et un mécanisme de fixation rapide (4), dans lequel le mécanisme de fixation rapide comprend une poignée (6) qui peut être pivotée en arrière et en avant autour d'un pivot de poignée (7) entre une position de fixation et une position de déblocage pour fixer et débloquer, respectivement, l'essieu de roue par rapport à une fourche arrière (8) d'une bicyclette lorsque le moyeu est placé dans la fourche arrière, dans lequel la poignée (6) est située au niveau d'une extrémité axiale du moyeu (1) sur une moitié longitudinale du tambour de moyeu (2), laquelle moitié longitudinale est dotée d'un ensemble de pignons (5) de plusieurs pignons individuels pour entraîner la roue arrière, et dans lequel le dérailleur (9) est configuré pour coopérer avec l'ensemble de pignons (5), **caractérisé en ce que**, au moins dans la position de fixation et observée sur la vue arrière du moyeu, au moins une partie de la poignée (6) est située sur le côté du dérailleur (9) qui est à distance des rayons de la roue arrière, pour protéger le dérailleur des chocs latéraux.

2. Cadre de bicyclette selon la revendication 1, dans lequel, au moins dans la position de fixation, l'extrême extrémité (61) de la poignée (6) à distance de l'essieu de roue (3), est située sur un côté à distance du tambour de moyeu (2) d'un premier plan de référence droit (V) qui est perpendiculaire à l'axe central (H) de l'essieu de roue (3) et s'étend à travers l'axe central (K) du pivot de poignée (7).

3. Cadre de bicyclette selon la revendication 2, dans lequel, dans la position de fixation, la distance, mesurée perpendiculairement au premier plan de référence (V), entre ladite extrême extrémité (61) de la poignée (6) et le premier plan de référence est supérieure à 5 millimètres.

4. Cadre de bicyclette selon l'une quelconque des revendications précédentes, dans lequel une partie d'extrémité (62) de la poignée (6) qui s'étend jusqu'à et comprend l'extrême extrémité (61) de la poignée à distance de l'essieu de roue (3), s'étend au moins des deux côtés opposés d'un second plan de référence droit (W), lequel second plan de référence est perpendiculaire à l'axe central (K) du pivot de poignée (7) et s'étend à travers l'axe central (H) de l'essieu de roue (3).
